(19) Europäisches Patentamt
European Patent Office
Office européen des brevets

(11) EP 3 345 760 B1

(12) **EUROPEAN PATENT SPECIFICATION**

(45) Date of publication and mention of the grant of the patent:
**12.05.2021 Bulletin 2021/19**

(21) Application number: **16841387.0**

(22) Date of filing: **03.08.2016**

(51) Int Cl.:
***B32B 27/32*** *(2006.01)*
***B32B 37/15*** *(2006.01)*
***B29C 48/00*** *(2019.01)*
***B32B 27/18*** *(2006.01)*
***B65D 65/40*** *(2006.01)*
***B29K 23/00*** *(2006.01)*
***B29L 9/00*** *(2006.01)*

(86) International application number:
**PCT/JP2016/072764**

(87) International publication number:
**WO 2017/038355 (09.03.2017 Gazette 2017/10)**

(54) **METHOD FOR MANUFACTURING LAMINATE**

VERFAHREN ZUR HERSTELLUNG VON LAMINATE

PROCÉDÉ DE FABRICATION DE STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2015 JP 2015170454**

(43) Date of publication of application:
**11.07.2018 Bulletin 2018/28**

(73) Proprietor: **Prime Polymer Co., Ltd.**
**Tokyo 105-7122 (JP)**

(72) Inventor: **YANAGISHITA, Yoshio**
**Ichihara-shi,**
**Chiba 299-0108 (JP)**

(74) Representative: **J A Kemp LLP**
**14 South Square**
**Gray's Inn**
**London WC1R 5JJ (GB)**

(56) References cited:
**EP-A1- 1 632 505**
**WO-A1-96/16115**
**WO-A1-2006/080578**
**JP-A- H0 859 917**
**JP-A- H09 510 668**
**JP-A- 2000 238 195**
**JP-A- 2006 188 562**
**JP-A- 2015 033 824**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 345 760 B1

## Description

### Technical Field

The present invention relates to a method for producing a laminate.

### Background Art

Polyethylene can be adhered, by extrusion laminate molding, with base materials such as paper, paperboards, polypropylene films, polyethylene terephthalate films, nylon films, metal foils, metal-deposited films and ceramic-deposited films as illustrated in WO9616115 . Among these base materials, films having a barrier property, such as metal foils such as aluminum foils, metal-deposited films and ceramic-deposited films, can be laminated with other base materials through polyethylene by sandwich extrusion laminating. In the case where sandwich extrusion laminating is carried out by using, as a base material, a metal foil, a metal-deposited film, a ceramic-deposited film or the like, due to the problem with the structure of molding machines, it is difficult to apply an anchor coat agent (adhesive agent) on the surface of the base material contacting a melted resin. Further, in the case of high-speed molding, when an anchor coat agent is applied, unevenness is liable to be generated. For these reasons, it is demanded to adhere a melted resin directly with a base material without using any anchor coat agent.

In the case where no anchor coat agent is applied on a base material, however, the adhesive strength between a melted resin and the base material decreases and particularly in the case where high-speed molding is carried out, the adhesive strength remarkably decreases. Hence, for example, the distance (air gap) between a die and a chill roll needs to be widened, or the molding speed needs to be lowered. In the case of widening the air gap, there becomes large the neck-in being a phenomenon that the melted resin shrinks inward, and the width of an obtained film becomes narrow in some cases. On the other hand, in the case of lowering the molding speed, the amount of production per unit time of films decreases.

Non Patent Literature 1 describes that in the extrusion laminate processing in which the adhesiveness with a base material is required, since the adhesiveness develops by oxidizing the surface of a melted resin, if an antioxidant is blended in the melted resin, the adhesiveness decreases.

Patent Literature 1 proposes a method of aging a film molded at a high temperature exceeding 300°C, in a high-temperature oven for a long time.

Patent Literatures 2 and 3 propose a method of using a material containing an acid copolymer or a material modified with a polar molecule.

Patent Literature 4 proposes a resin composition for a laminate paper exhibiting no generation of take-off surging in the extrusion laminate molding and is excellent in the high-speed moldability, and a laminate paper containing at least one layer composed of the resin composition. Patent Literature 4 proposes the use of a specific polyethylene containing long-chain branches and no inclusion of any additive making the adhesiveness to a base material excellent.

Patent Literature 5 proposes a method of carrying out an ozone treatment on an ethylene-based polymer to oxidize the surface to thereby improve the adhesiveness with a base material.

### Citation List

#### Patent Literature

Patent Literature 1: JP06-190964A
Patent Literature 2: JP02-25327A
Patent Literature 3: JP2002-210867A
Patent Literature 4: JP2008-031383A
Patent Literature 5: JP11-138721A

#### Non Patent Literature

Non Patent Literature 1: Masayoshi Araki (issuer), "Newest Laminate Processing Handbook", 1989, p.267

## Summary of Invention

### Technical Problem

However, even if the melted resin is a polyethylene containing no antioxidant described in Non Patent Literature 1, since in high-speed molding, the oxidation time in the air gap-passing time is short, sufficient adhesiveness cannot be attained. Further, it is known that with the thickness of the polyethylene being smaller, since the lowering of the temperature of the melted film occurs faster, the sufficient oxidation reaction more hardly occurs and the adhesive strength becomes weaker.

The method described in Patent Literature 1 poses difficulty in using a low-melting point polyethylene due to a problem of high-temperature aging, and further, is low in the production efficiency because of the long aging time.

The methods described in Patent Literatures 2 and 3 give materials strong in odor because the materials contain a large amount of polar groups, of which materials applications are then limited, and further demand relatively high raw material costs, and also have difficulty in purging in exchanges of resins.

The method described in Patent Literature 4 uses the state where the air gap is made wider in Examples than in the usual extrusion laminate film production, which limits a processing machine with which the processing can be carried out, and limits a usable material to a special polyethylene.

The method described in Patent Literature 5 necessitates a low-density polyethylene resin and an ozone treatment facility, and then demands relatively high costs for the raw material and a facility for eliminating ozone toxicity.

The present invention has an object to provide a method for producing a laminate having a high adhesive strength between a polyethylene layer and a base material layer in high-speed molding and in molding to reduce the thickness of the polyethylene without using any anchor coat agent. The present invention further has an object to provide such a method for producing the laminate, wherein neck-in is small in molding; generation of film break and take-off surging is suppressed; and high-speed molding can be carried out.

### Solution to Problem

The present invention is the following [1] to [7].

[1] A method for producing a laminate, including a step of extrusion laminating a resin composition including an ethylene-based polymer composition containing an ethylene-based polymer and a phosphorus-containing compound represented by the following formula (A) and/or a phosphorus-containing compound represented by the following formula (D) with a base material so that the resin composition and the base material directly contact each other,
wherein the ethylene-based polymer contains at least one of a high-pressure processed low-density polyethylene and a copolymer of ethylene with an α-olefin having 3 to 10 carbon atoms; and
the ethylene-based polymer composition satisfies the following requirements (I) to (IV);
wherein the resin composition and the base material are extrusion laminated at a speed of 150 to 1,000 m/min; and
wherein the temperature of the resin composition when being extrusion laminated is 310 to 350°C;

Formula (A)

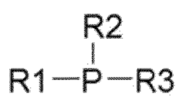

in the above formula (A), R1 to R3 are each independently an alkyl group having 1 to 30 carbon atoms, an isoalkyl group having 3 to 30 carbon atoms, an alkenyl group having 3 to 18 carbon atoms, a cycloalkyl group having 5 to 12 carbon atoms or an aryl group; or
an alkyl group having 1 to 18 carbon atoms substituted with an aryl group, a halogen atom, -COOR4, -CN, -NR5R6 or -CONR7R8; or
an alkoxy group having 1 to 30 carbon atoms, an isoalkyloxy group having 3 to 30 carbon atoms, an alkenyloxy group having 3 to 18 carbon atoms or a cycloalkyloxy group having 5 to 12 carbon atoms; or
an alkoxy group having 1 to 18 carbon atoms substituted with an aryl group, a halogen atom, -COOR9, -CN, -NR10R11 or -CONR12R13, or a group represented by the following formula (B):

Formula (B)

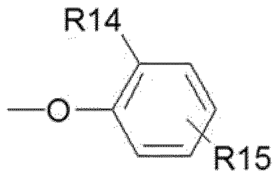

or, an alkylthio group having 1 to 30 carbon atoms, an isoalkylthio group having 3 to 30 carbon atoms, an alkenylthio group having 3 to 18 carbon atoms or a cycloalkylthio group having 5 to 12 carbon atoms; or
an alkylthio group having 1 to 18 carbon atoms substituted with an aryl group, a halogen atom, -COOR16, -CN, -NR17R18 or -CONR19R20, or a group represented by the following formula (C):

Formula (C)

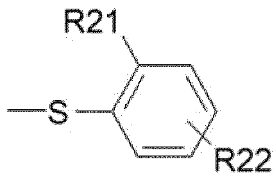

wherein R4 to R13, R15 to R20 and R22 are each independently a hydrogen atom, an alkyl group having 1 to 30 carbon atoms, an isoalkyl group having 3 to 30 carbon atoms, an alkenyl group having 3 to 18 carbon atoms, a cycloalkyl group having 5 to 12 carbon atoms or an aryl group;
R14 and R21 are each an alkyl group having 1 to 30 carbon atoms, an isoalkyl group having 3 to 30 carbon atoms, an alkenyl group having 3 to 18 carbon atoms, a cycloalkyl group having 5 to 12 carbon atoms or an aryl group; and at least two of R1 to R3 may be bonded with each other:

Formula (D)

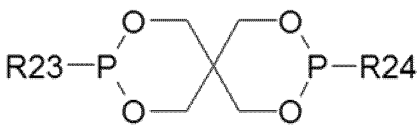

in the above formula (D), R23 and R24 are synonymous with R1 to R3 in the above formula (A), and

(I) the melt flow rate (MFR) at 190°C at a load of 2.16 kg is 4 to 50 g/10 min;
(II) the density is 875 to 940 kg/$m^3$;
(III) the content of a compound having a phenol group is lower than 0.05% by mass; and
(IV) the melt tension at 190°C is 10 mN or higher.

[2] The method for producing a laminate according to any [1], wherein the air gap passing time T determined by the following expression when the resin composition and the base material are extrusion laminated is 0.007 to 0.100 sec.

$$\text{Air gap passing time T} = \text{an air gap space (m)} / \text{a molding speed (m/sec)}$$

[3] The method for producing a laminate according to [1] or [2], wherein in the formula (A), R1 to R3 are each independently a group represented by the formula (B).
[4] The method for producing a laminate according to any of [1] to [3], wherein the phosphorus-containing compound is tris(2,4-di-tert-butylphenyl) phosphite.
[5] The method for producing a laminate according to any of [1] to [4], wherein the thickness of a polyethylene layer containing the ethylene-based polymer composition in the laminate is 5 to 100 μm.
[6] The method for producing a laminate according to any of [1] to [5], wherein the thickness of a base material layer

composed of the base material in the laminate is 1 to 500 μm.

[7] The method for producing a laminate according to any one of [1] to [6], wherein the base material layer is a paper, a perforated film, a metal foil, a metal-deposited film or a ceramic-deposited film.

Advantageous Effects of Invention

According to the present invention, there can be provided a method for producing a laminate having a high adhesive strength between the polyethylene layer and the base material layer without using any anchor coat agent. Further, according to the present invention, there can be provided a method for producing the laminate, wherein neck-in is small in molding; generation of film break and take-off surging is suppressed; and high-speed molding can be carried out.

Description of Embodiments

[Laminate]

The laminate produced according to the method of the present invention includes a polyethylene layer including an ethylene-based polymer composition containing an ethylene-based polymer and a phosphorus-containing compound represented by the following formula (A) and/or a phosphorus-containing compound represented by the following formula (D), and a base material layer. The polyethylene layer and the base material layer are in direct contact with each other. The ethylene-based polymer includes at least one of a high pressure-processed low-density polyethylene and a copolymer of ethylene with an α-olefin having 3 to 10 carbon atoms. Further, the ethylene-based polymer composition satisfies the above requirements (I) to (IV).

The ethylene-based polymer composition whose MFR, density and melt tension are all in the ranges of the present invention is excellent in extrusion laminate processability. In the extrusion laminate processing, no addition of additives such as an antioxidant can promote the oxidation reaction of the resin and enhance the adhesive strength with the base material. In the case where the ethylene-based polymer composition contains no antioxidant, the surface of the polyethylene layer is relatively easily oxidized, and there is exhibited the adhesiveness in some degree also between the surface thereof and a base material such as a paper, a perforated film, a metal foil, a metal-deposited film or a ceramic-deposited film. When the molding speed is raised for the purpose of improving the productivity of the laminate, however, since the contact time of the polyethylene layer with air becomes short, the surface oxidation of the polyethylene layer becomes insufficient and the adhesive strength with the base material decreases. Hence, an anchor coat agent needs to be applied, or the molding speed needs to be reduced.

As a result of exhaustive studies, the present inventor has found that by blending the phosphorus-containing compound represented by the formula (A) and/or the phosphorus-containing compound represented by the formula (D) in the ethylene-based polymer, also in the case where high-speed molding is carried out, the polyethylene layer exhibits a high adhesive strength with the base material. By the way, resins containing polar molecules such as acid copolymers generally used in order to improve the adhesive strength, and resins susceptible to oxidation, such as resins containing peroxides, are liable to cause gelation and are liable to make phenomena such as fish eyes occur. However, it has been found that in the case of using the ethylene-based polymer composition according to the present invention, the occurrence frequency of fish eyes is equivalent to that in the resin composition having no additive added to improve the adhesive strength.

The mechanism is not completely clear, but it is conceivable that according to the present invention, the inclusion of a phosphorus-containing compound represented by the above formula (A) and/or a phosphorus-containing compound represented by the above formula (D) into the ethylene-based polymer composition exhibits some action and promotes the surface oxidation reaction of the polyethylene layer. In the usual oxidation reaction, it is conceivable that radicals cause catalytically reactively the crosslinking reaction in such a way that radicals are generated by thermal energy of a melted film; the radicals, a polyethylene and oxygen react to thereby produce a polyethylene having peroxides bonded thereto; and oxygen radicals generated by decomposition of the peroxides bonded to the polyethylene react further with other polyethylene. In this case, it is presumed that since the radicals (oxygen radicals originated from the peroxides) once generated cause the crosslinking reaction, there is a low proportion of a polyethylene having oxygen atoms finally present as side chains of the polyethylene in polyethylene as a whole having had peroxides bonded thereto.

By contrast, in the present invention, it is conceivable that since due to the inclusion of a phosphorus-containing compound represented by the above formula (A) and/or a phosphorus-containing compound represented by the above formula (D), in an oxidation step, there are suppressed the preferential decomposition of peroxide moieties of polyethylene having peroxides bonded thereto and the advancement to the crosslinking reaction, oxygen atoms resultantly remain as a form, such as a carbonyl group, of being bonded to side chains of the polyethylene. Hence, in the present invention, it is presumed that since while generation of fish eyes due to the advancement of the gelation by crosslinking is suppressed,

even oxygen atoms, which originally might well advance to the crosslinking reaction and make part of the main chain, can be present as side chains, the polyethylene layer having the surface efficiently oxidized can be formed and also in high-speed molding, the adhesive strength with the base material becomes high.

Further, phosphorus-containing compounds such as phosphorus-based antioxidants are liable to cause the decomposition reaction such as hydrolysis depending on the structures of the compounds, and vary to compounds having lower molecular weights than original ones in some cases. It is known that with respect to compounds having low molecular weights, such as slipping agents and antistatic agents, their molecules quickly migrate in resins and bleed out on the resin surfaces. Further, depending on the structures of the phosphorus-containing compounds, after the decomposition, there are produced in some cases, in addition to phosphoric acid and phosphate esters, compounds having a phenol structure capturing radicals. Therefore, even in phosphorus-containing compounds, phosphorus-containing compounds having structures of being easily decomposed and easily varying to low-molecular compounds, and easily producing compounds having a phenol group inhibit the adhesion of the base material with the polyethylene layer due to the bleeding-out onto the polyethylene layer surface and the development of the radical capturing action, in some cases. The phosphorus-containing compound represented by the above formula (A) and/or the phosphorus-containing compound represented by the above formula (D) according to the present invention contain phosphorus, and are presumably compounds having structures hardly causing decomposition. Among phosphorus-containing compounds represented by the above formula (A), especially preferable are compounds in which R1 to R3 are each independently a group represented by the above formula (B). Hereinafter, details of the invention will be described.

(Ethylene-based polymer)

The ethylene-based polymer composition used in the method according to the present invention includes an ethylene-based polymer. The ethylene-based polymer includes at least one of a high-pressure processed low-density polyethylene and a copolymer of ethylene with an $\alpha$-olefin having 3 to 10 carbon atoms. The number of carbon atoms in the $\alpha$-olefin is preferably 3 to 8, and more preferably 4 to 8. The $\alpha$-olefin includes propylene, 1-butene, 1-hexene, 4-methyl-1-pentene, 1-octene and 1-decene. Examples of commercially available products of copolymers of ethylene with an $\alpha$-olefin having 3 to 10 carbon atoms include Evolue (trade name, manufactured by Prime Polymer Co., Ltd.). Further, there can also be used high-density polyethylenes (HDPE), elastomers (EL) and plastomers (PL). Further, there can also be used ethylene-based polymers disclosed in International Publication Nos. WO2006/080578, WO2004/104055 and WO02/08306. These may be used singly or in combinations of two or more.

(Phosphorus-containing compound represented by the formula (A) and Phosphorus-containing compound represented by the formula (D))

The ethylene-based polymer composition used in the method according to the present invention includes a phosphorus-containing compound represented by the above formula (A) and/or a phosphorus-containing compound represented by the above formula (D). Since due to the inclusion of the phosphorus-containing compound represented by the above formula (A) and/or the phosphorus-containing compound represented by the above formula (D), the generation of radicals is maintained while peroxides are decomposed, the oxidation reaction of the polyethylene layer surface is promoted and the generation of defects due to gelation is simultaneously suppressed and excellent adhesiveness with a base material is developed. Since the phosphorus-containing compound represented by the above formula (A) and/or the phosphorus-containing compound represented by the above formula (D) are compounds having a trivalent phosphorus varying to a pentavalent phosphorus, and have a chemical structure hardly generating a phenol compound by being hydrolyzed, the above effect presumably develops. For example, even in the case where in the above formula (A), an oxygen atom intervenes between R1 to R3 each and phosphorus, R1 to R3 can each be a group (R1 to R3 are each a group having a straight-chain, branched-chain or cyclic hydrocarbon group that is not an aryl group, bonded to phosphorus through an oxygen atom) such as to generate not a phenol but an alcohol when being decomposed, or a hardly-decomposable group (R1 to R3 are each a group having an aryl group bonded to phosphorus through an oxygen atom wherein the ortho-position of the aryl group has a substituent not being hydrogen, or only R3 is a group bonded to phosphorus through an oxygen atom).

In R1 to R3 of the above formula (A), the alkyl group having 1 to 30 carbon atoms includes a methyl group, an ethyl group, a propyl group, a butyl group, a pentyl group, a hexyl group, a heptyl group, an octyl group, a nonyl group, a decyl group, a lauryl group, a tridecyl group and an oleyl group. The isoalkyl group having 3 to 30 carbon atoms includes an isopropyl group, an isobutyl group and an isopentyl group. The alkenyl group having 3 to 18 carbon atoms includes a propenyl group, a butenyl group, a pentenyl group, a hexenyl group, a heptenyl group, an octenyl group, a nonenyl group and a decenyl group. The cycloalkyl group having 5 to 12 carbon atoms includes a cyclopentyl group, a cyclohexyl group, a cycloheptyl group and a cyclooctyl group. The aryl group includes a phenyl group. The halogen atom includes fluorine, chlorine, bromine and iodine. The alkyl group having 1 to 18 carbon atoms includes groups having

1 to 18 carbon atoms out of the alkyl groups having 1 to 30 carbon atoms.

In R1 to R3 of the above formula (A), the alkoxy group having 1 to 30 carbon atoms includes groups in which an oxygen atom is bonded to the above alkyl group having 1 to 30 carbon atoms. The isoalkyloxy group having 3 to 30 carbon atoms includes groups in which an oxygen atom is bonded to the above isoalkyl group having 3 to 30 carbon atoms. The alkenyloxy group having 3 to 18 carbon atoms includes groups in which an oxygen atom is bonded to the above alkenyl group having 3 to 18 carbon atoms. The cycloalkyloxy group having 5 to 12 carbon atoms includes groups in which an oxygen atom is bonded to the above cycloalkyl group having 5 to 12 carbon atoms. The alkoxy group having 1 to 18 carbon atoms includes groups having 1 to 18 carbon atoms out of the above alkoxy groups having 1 to 30 carbon atoms.

In R1 to R3 of the above formula (A), the alkylthio group having 1 to 30 carbon atoms includes groups in which a sulfur atom is bonded to the above alkyl group having 1 to 30 carbon atoms. The isoalkylthio group having 3 to 30 carbon atoms includes groups in which a sulfur atom is bonded to the above isoalkyl group having 3 to 30 carbon atoms. The alkenylthio group having 3 to 18 carbon atoms includes groups in which a sulfur atom is bonded to the above alkenyl group having 3 to 18 carbon atoms. The cycloalkylthio group having 5 to 12 carbon atoms includes groups in which a sulfur atom is bonded to the above cycloalkyl group having 5 to 12 carbon atoms. The alkylthio group having 1 to 18 carbon atoms includes groups having 1 to 18 carbon atoms out of the above alkylthio groups having 1 to 30 carbon atoms.

In R4 to R22 of the above formula (A), the alkyl group having 1 to 30 carbon atoms, the isoalkyl group having 3 to 30 carbon atoms, the alkenyl group having 3 to 18 carbon atoms, the cycloalkyl group having 5 to 12 carbon atoms and an aryl group can be the same as in R1 to R3.

Among the phosphorus-containing compounds represented by the above formula (A), preferable are compounds in which R1 to R3 are each independently an alkoxy group having 1 to 30 carbon atoms, an isoalkyloxy group having 3 to 30 carbon atoms, an alkenyloxy group having 3 to 18 carbon atoms or a cycloalkyloxy group having 5 to 12 carbon atom, an alkoxy group having 1 to 18 carbon atoms substituted with an aryl group, a halogen atom, -COOR9, -CN, -NR10R11 or -CONR12R13, or a group represented by the above formula (B), which are each bonded to phosphorus through the oxygen atom; and more preferable are compounds in which R1 to R3 are each independently a group represented by the above formula (B). By using a compound in which R1 to R3 are each independently a group represented by the above formula (B), the decomposition of the compound itself can be suppressed and the decrease in the adhesiveness due to the molecular weight reduction can be suppressed.

Examples of the phosphorus-containing compound represented by the above formula (A) include tris(2,4-di-tert-butylphenyl) phosphite, tris(2-ethylhexyl) phosphite, triisodecyl phosphite, 2,2'-methylenebis(4,6-di-tert-butylphenyl) 2-ethylhexylphosphite, 2,2'-methylenebis(4,6-di-tert-butylphenyl) 2-ethylhexylphosphinous and trilaury trithiophosphite. Examples of commercially available products thereof include Irgafos 168 (trade name, manufactured by BASF AG), Sangwon 1680 (trade name, manufactured by Sangwon Co., Ltd.), ADK Stab HP-10 (trade name, manufactured by Adeka Corp.), ADK Stab 3010 (trade name, manufactured by Adeka Corp.), JPS-312 (trade name, manufactured by Johoku Chemical Co., Ltd.) and JP-308E (trade name, manufactured by Johoku Chemical Co., Ltd.). These may be used singly or in combinations of two or more.

R23 and R24 of the above formula (D) are synonymous with R1 to R3 in the above formula (A). Examples of the phosphorus-containing compound represented by the above formula (D) include distearylpentaerythritol diphosphite, bis(decyl)pentaerythritol diphosphite and bis(tridecyl)pentaerythritol diphosphite. Examples of commercially available products thereof include JPP-2000PT (trade name, manufactured by Johoku Chemical Co., Ltd.), JPE-10 (trade name, manufactured by Johoku Chemical Co., Ltd.) and JPE-13R (trade name, manufactured by Johoku Chemical Co., Ltd.). These may be used singly or in combinations of two or more.

The amount of a phosphorus-containing compound represented by the above formula (A) and/or a phosphorus-containing compound represented by the above formula (D) contained in the ethylene-based polymer composition is preferably 0.03 to 1.0% by mass, more preferably 0.03 to 0.5% by mass, and still more preferably 0.05 to 0.3% by mass. When the content of the phosphorus-containing compound is 0.03% by mass or higher, a favorable base material adhesiveness can be attained. Further, when the content of the phosphorus-containing compound is 1.0% by mass or lower, there can be prevented the generation of white fumes originated from the phosphorus-containing compound in extrusion laminate processing.

(Requirement (I))

The ethylene-based polymer composition used in the method according to the present invention has a melt flow rate (MFR) at 190°C at a load of 2.16 kg of 4 to 50 g/10 min. The MFR is preferably 4 to 40 g/10 min, more preferably 4 to 30 g/10 min, still more preferably 4 to 25 g/10 min, and especially preferably 5 to 15 g/10 min. When the MFR is 4 g/10 min or higher, the shearing viscosity of the ethylene-based polymer composition is not too high, and the extrusionability and the thin film processability are favorable. Further, when the MFR is 50 g/10 min or lower, the laminate is favorable in the tensile strength and the heat seal strength and excellent in the neck-in and the mechanical strength.

MFR is a numerical value indicating a strength and a flowability at which extrusion laminate processing is possible. The value of MFR depends largely on the molecular weight; the lower the MFR, the higher the molecular weight, and the higher the MFR, the lower the molecular weight. Then, it is known that the molecular weight of an ethylene-based polymer is determined by the composition ratio (hydrogen/ethylene) of hydrogen and ethylene in a polymerization system (for example, Kazuo Soga, et. al. (eds.), "Catalytic Olefin Polymerization", Kodansha Scientific Ltd., 1990, p.376). Hence, by varying the ratio of hydrogen/ethylene, the MFR can be varied.

Here, in the present invention, MFR is a value measured according to JIS K6760 under the condition of 190°C and a load of 2.16 kg.

(Requirement (II))

The density of the ethylene-based polymer composition used in the method according to the present invention is 875 to 940 kg/$m^3$. The density is preferably 885 to 940 kg/$m^3$, more preferably 890 to 940 kg/$m^3$, still more preferably 895 to 935 kg/$m^3$, and especially preferably 900 to 930 kg/$m^3$. When the density is 875 kg/$m^3$ or higher, the tackiness of the surface of the obtained laminate becomes low. Further, when the density is 940 kg/$m^3$ or lower, the mechanical strengths, such as the adhesive strength with the base material, the heat seal strength and the bag breaking strength, are favorable and particularly the adhesive strength with the base material and the low-temperature heat sealability are excellent. That is, since the crystallization rate can be controlled, the cooling solidification of the melted resin before contact thereof with the base material in extrusion laminate processing can be suppressed, and thin-film molding becomes possible.

The density is an index indicating the range where the laminate can be used with no tackiness and as a sealable film. In the case where the ethylene-based polymer contains a copolymer of ethylene with an α-olefin having 3 to 10 carbon atoms, the value of the density depends on the content of the α-olefin in the copolymer; the lower the content of the α-olefin, the higher the density, and the higher the content of the α-olefin, the lower the density. Further, it is known that the content of the α-olefin in the ethylene copolymer is determined by the composition ratio (a-olefin/ethylene) of the α-olefin and ethylene in a polymerization system (for example, Walter Kaminsky, Makromol. Chem. 193, p.606(1992)). Hence, by varying the ratio of the α-olefin/ethylene, an ethylene copolymer having a density in the above range can be produced. Then, although the high pressure-processed low-density polyethylene can be varied in the density generally by the polymerization temperature and the polymerization pressure, since so large a variation in the density as can be made for the ethylene copolymer is difficult for the polyethylene, by making a composition with the ethylene copolymer having a different density, the regulation of the density can be carried out.

Here, in the present invention, the density of an object is measured by heat-treating the object in boiling water for 30 min and slowly cooling the object over 1 hour to room temperature under the spontaneous cooling condition according to a method of JIS K6922-1, and measuring the density by using a density gradient tube according to JIS K7112.

(Requirement (III))

The content of a compound having a phenol group in the ethylene-based polymer composition used in the method according to the present invention is lower than 0.05% by mass. The compound having a phenol group includes antioxidants containing a phenol structure. The content of the compound having a phenol group is preferably lower than 0.03% by mass, more preferably lower than 0.02% by mass, and still more preferably lower than 0.01% by mass, and especially preferably, the ethylene-based polymer composition contains no compound having a phenol group. When the content of the compound having a phenol group is lower than 0.05% by mass, since the degree of oxidation of the surface of the melted film can suitably be controlled, the adhesiveness with the base material can be improved.

(Requirement (IV))

The melt tension at 190°C of the ethylene-based polymer composition used in the method according to the present invention is 10 mN or higher. The melt tension is preferably 15 mN or higher, more preferably 18 mN or higher, and still more preferably 20 mN or higher. In the case where the melt tension is 10 mN or higher, since the melt elastic modulus of the ethylene-based polymer composition increases, neck-in becomes small and excellent extrusion laminate processability can be attained. The upper limit of the melt tension is not especially limited, but can be made to be, for example, 200 mN or lower.

Here, in the present invention, the melt tension is a value measured by a method described later.

(Polyethylene layer)

The polyethylene layer according to the present invention includes the ethylene-based polymer composition

containing the ethylene-based polymer, and the phosphorus-containing compound represented by the above formula (A) and/or the phosphorus-containing compound represented by the above formula (D). The polyethylene layer may contain other thermoplastic resins other than the ethylene-based polymer, slipping agents, antistatic agents, weather-resistive stabilizers, antifogging agents, pigments, dyes, nucleating agents and the like.

The thickness of the polyethylene layer is preferably 5 to 100 μm, more preferably 5 to 80 μm, still more preferably 5 to 50 μm, and especially preferably 5 to 35 μm. When the thickness is 5 μm or larger, the adhesive strength with the base material layer, the seal strength and the laminate strength are improved. Further, when the thickness is 100 μm or smaller, the laminate can easily be cut.

(Other thermoplastic resins)

In the method of the invention, the polyethylene layer according to the present invention can contain, in addition to the ethylene-based polymer composition according to the present invention, other thermoplastic resins other than the above ethylene-based polymer. The inclusion of the other thermoplastic resins can provide a resin composition excellent in moldability and excellent in the mechanical strength. The blend ratio (in mass ratio) of the ethylene-based polymer composition according to the present invention and the other thermoplastic resins is preferably 99.9/0.1 to 0.1/99.9, and more preferably 90/10 to 10/90.

Examples of the other thermoplastic resins include polyolefins other than the ethylene-based polymer according to the present invention, crystalline thermoplastic resins such as polyamide, polyester and polyacetal, noncrystalline thermoplastic resins such as polystyrene, acrylonitrile·butadiene·styrene copolymers (ABS), polycarbonate, polyphenylene oxide and polyacrylate, and polyvinyl chloride.

The polyolefins specifically include ethylene copolymers other than the ethylene-based polymer according to the present invention, propylene-based polymers, butene-based polymers, 4-methyl-1-pentene-based polymers, 3-methyl-1-butene-based polymers, hexene-based polymers and cyclic monomer-containing polyolefins. Among these, preferable are the ethylene copolymers other than the ethylene-based polymer according to the present invention, the propylene-based polymers and the 4-methyl-1-pentene-based polymers.

The ethylene copolymers other than the ethylene-based polymer according to the present invention include acid copolymers such as ethylene·vinyl acetate copolymers (EVA), ethylene·acrylic acid copolymers (EAA), ethylene·methacrylic acid copolymers (EMAA), ethylene·methacrylate ester copolymers, ethylene·acrylate ester copolymers, and ionomers in which these acid copolymers are pseudo-crosslinked with metal ions.

The polyamide specifically includes aliphatic polyamides such as nylon-6, nylon-66, nylon-10, nylon-12 and nylon-46, and aromatic polyamides produced from aromatic dicarboxylic acids and aliphatic diamines.

The polyester specifically includes aromatic polyesters such as polyethylene terephthalate, polyethylene naphthalate and polybutylene terephthalate, polycaprolactones, and polyhydroxybutylate.

The polyacetal specifically includes polyformaldehyde (polyoxymethylene), polyacetoaldehyde, polypropionaldehyde, and polybutylaldehyde. Among these, polyformaldehyde is preferable.

The polystyrene may be a homopolymer of styrene, or may be a binary copolymer of styrene and acrylonitrile, methyl methacrylate or α-methylstyrene.

The ABS is preferably ABSs containing 20 to 35% by mol of a structural unit derived from acrylonitrile, 20 to 30% by mol of a structural unit derived from butadiene and 40 to 60% by mol of a structural unit derived from styrene.

The polycarbonate includes polycarbonates obtained from bis(4-hydroxyphenyl)methane, 1,1-bis(4-hydroxyphenyl)ethane, 2,2-bis(4-hydroxyphenyl)propane, 2,2-bis(4-hydroxyphenyl)butane and the like. Among these, preferable is polycarbonate obtained from 2,2-bis(4-hydroxyphenyl)propane.

The polyphenylene oxide is preferably poly(2,6-dimethyl-1,4-phenylene oxide).

The polyacrylate is preferably polymethyl methacrylate and polybutyl acrylate.

These other thermoplastic resins may be used singly or in combinations of two or more. Among these other thermoplastic resins, the polyolefins other than the ethylene-based polymer according to the present invention is preferable and the ethylene copolymer other than the ethylene-based polymer according to the present invention is more preferable.

(Base material layer)

The base material layer according to the present invention includes paper, OPP, OPET, ONy, perforated films, metallic foils such as aluminum foils and copper foils, metal-deposited films in which a metal such as aluminum is vapor-deposited on a film such as a polyethylene film, a polypropylene film or a polyethylene terephthalate film, and ceramic-deposited films in which a ceramic, such as silica, alumina, indium tin oxide (ITO), and a metal oxide of zinc, tin, titanium, zirconium, vanadium, barium, chromium or the like, and silicon nitride and silicon carbide, is vapor-deposited on a film such as a polyethylene film, a polypropylene film or a polyethylene terephthalate film. From the viewpoint of usually not

using any anchor coat agent in the adhesive processing, as the base material layer, preferable are paper, perforated films, metal foils, metal-deposited films and ceramic-deposited films. On these base material layers, a resin may be coated, or may be printed. Here, the anchor coat agent includes urethane-based, titanate-based, imine-based, butadiene-based and olefin-based ones.

The thickness of the base material layer is preferably 1 to 500 μm, more preferably 5 to 300 μm, still more preferably 5 to 100 μm, and especially preferably 5 to 20 μm. When the thickness of the base material layer is 1 μm or larger, the strength of the laminate is improved. Further, when the thickness of the base material layer is 500 μm or smaller, the rigidity can be made low and the laminate processing becomes easy.

In the present invention, the polyethylene layer and the base material layer are in direct contact with each other. That is, the laminate according to the present invention includes no layer containing an anchor coat agent or the like between the polyethylene layer and the base material layer. When an anchor coat agent is used, in the case of using a base material having holes such as a perforated film, the anchor coat oozes out from the holes and when a film roll is fabricated, blocking is then generated. Further, in the case of using a metal foil, a metal-deposited film or a ceramic-deposited film as the base material, there is needed new installation of an apparatus to apply the anchor coat agent on the base material or application of the anchor coat agent in a separate step in advance, then increasing the production cost of the laminate. In the present invention, since the adhesive force of the polyethylene layer to the base material layer is large, sufficient adhesiveness can be attained even if no anchor coat agent is used.

(Barrier layer)

It is preferable that the laminate produced according to the method of the present invention include, in addition to the polyethylene layer and the base material layer, further a barrier layer. When the barrier layer is included, in the case of using the laminate according to the present invention as a packaging bag, the preservability and the aroma retention of packaged contents become favorable. For the barrier layer, there can be used materials having a property of blocking light, properties of not permeating steam, water, gases, oil contents and the like, and other properties. As the barrier layer, there can be used, for example, metallic foils such as aluminum foils and copper foils, films having a vapor-deposited film formed thereon in which a metal such as aluminum, a metal oxide such as silica, alumina, indium tin oxide (ITO), zinc, tin, titanium, zirconium, vanadium, barium, chromium or the like, a ceramic such as silicon nitride and silicon carbide, is vacuum-deposited or sputtered on a film such as a polyethylene film, a polypropylene film or a polyethylene terephthalate film. Here, as the film to support the vapor-deposited film, since the vapor-deposited film is provided on the film, preferably used are films being excellent in mechanical, physical, chemical and other properties, and particularly being high in the strength and tough and having heat resistance. Further, as materials for the barrier layer, there can be used synthetic resins having a low gas permeability, such as ethylene·vinyl alcohol copolymers (EVOH), polyamide (PA), polyvinylidene chloride (PVDC), polyvinyl alcohol (PVA), MX nylon (MXD6), polyacrylonitrile resins (PAN) and cyclic olefins, and besides, acid copolymers such as ethylene·vinylacetate copolymers (EVA), ethylene·acrylic acid copolymers (EAA), ethylene·methacrylic acid copolymers (EMAA), ethylene·methacrylate esters and ethylene·acrylate esters. These materials may be used singly or in combinations of two or more. Here, the base material layer may be the barrier layer; in this case, the laminate according to the present invention includes the polyethylene layer, and the base material layer as a barrier layer.

The thickness of the metal foil is preferably 1 to 100 μm. The thickness of the film on which the vapor-deposited film is formed is preferably 1 to 200 μm, and more preferably 3 to 100 μm. Further, the thickness of the vapor-deposited film is preferably 5 to 300 nm, and more preferably 10 to 100 nm.

(Applications)

The laminate produced according to the method of the present invention, since having high adhesiveness between the polyethylene layer and the base material layer, can be used as a sealant film. Examples of the sealant film include one having a structure of PET/polyethylene layer/base material layer/polyethylene layer, and for the material of the base material layer, aluminum can be used. The sealant film can be used for packaging films or the like, for example, for foodstuff such as snacks, granules and dry provisions, and powder detergents.

The laminate produced according to the method of the present invention can further be used as various types of packaging films for liquid packaging bags, liquid soup packaging bags, liquid paper cartons, laminate raw sheets, special-shape liquid packaging bags (standing pouches and the like), standard bags, heavy-duty bags, wrap films, sugar bags, oil packaging bags, food packaging bags and the like, and as protect films, infusion bags, agricultural materials and bag-in boxes, and as clean films or the like, used for packaging semiconductor materials, pharmaceuticals and foods, and the like.

The bags as described herein can be composed of the laminate produced according to the present invention. The bag, since having, for example, the polyethylene layer as an inner layer and the base material layer as an outer

layer, can be used as packaging bags for semiconductor materials, pharmaceuticals, foods and the like. Further, as required, on the outer side of the base material layer, a resin may be coated as a protection layer.

The bag as described herein can have the polyethylene layer as a middle layer. Further, in consideration of water resistance, moisture resistance and chemical resistance, the bag can have the polyethylene layer as a surface protection layer. Further, the bag according to the present invention, from the viewpoint of the appearance and the touch feeling, has the base material layer of a paper, a perforated film, a metal foil, a metal-deposited film, a ceramic-deposited film or the like so as to directly contact the polyethylene layer. In the case where the base material layer is an outer layer, as required, a resin may be coated on the base material layer, as a protection layer of the base material layer.

The laminate and the bag as described herein can also be constituted of three or more layers. In this case, in consideration of rigidity, barrier property, designability, strength, light blockability and interlayer adhesiveness of the laminate, the laminate is molded preferably by extrusion laminate molding in a plurality of times, dry laminate molding, coextrusion molding with a seal layer, sandwich extrusion laminate molding with a sandwiching layer film fabricated by another molding, laminate molding using an extrusion laminating machine of tandem type having a plurality of dies, or the like.

The thickness of the sandwiching layer film is, in the case where the material of the sandwiching layer film is a synthetic resin, preferably 1 to 200 $\mu$m. In the case where the sandwiching layer film is a metal foil such as an aluminum foil, the thickness of the sandwiching layer film is preferably 1 to 100 $\mu$m. Here, when the middle layer is too thin, the barrier property decreases, and when being too thick, the flexibility decreases, in some cases.

The bag as described herein can be produced, for example, by using the laminate(s) produced according to the method of the present invention, making the surfaces of the seal layer(s) to face each other and superposing the laminate(s), and heat-sealing a peripheral end portion(s) thereof to form a seal portion(s). Specifically, the heat-sealing of the peripheral end portions includes a method of heat-sealing by folding or superposing the peripheral end portion(s) and making the surfaces of the inner layers to face each other, and further heat-sealing the peripheral end portion(s) by a heat-sealing form, for example, by lateral sealing, two-side sealing, three-side sealing, four-side sealing, envelope-pasting sealing, hand-joining-like sealing, (pillow sealing), pleated sealing, flat bottom sealing, square bottom sealing, gusset forming or the like. Examples of a heat seal method include bar sealing, rotary roll sealing, belt sealing, impulse sealing, high-frequency sealing and ultrasonic sealing. A content is filled in the bag from its opening and thereafter, the opening can also be heat-sealed.

In order to sufficiently develop the heat seal strength and sufficiently seal a content, it is important that every laminated material is sufficiently adhered. Then, packaging bags in which contents are filled and whose openings are then heat-sealed presuppose that the packaging bags are thereafter cut and the filled contents are again taken outside, in many cases. It is strongly demanded particularly for foods in individual packaging that the content can simply be taken out by cutting a packaging bag without using scissors nor a knife after their purchase. Here, in order to improve the cutting property of a laminate film to be used for the packaging bag, it becomes important that the polyethylene laminated directly with a (biaxially) oriented polypropylene film (OPP), a (biaxially) oriented polyethylene terephthalate film (OPET), a (biaxially) oriented nylon film (ONy), aluminum or the like is sufficiently adhered and unified with each of the film. In the case where the adhesive force is sufficient, even a material soft and easily extensible like polyethylene becomes enabled to be cut together with a hard and hardly extensible material laminated with the material; but in the case where the adhesive force is insufficient, the polyethylene resultantly separates from the hard material in cutting. The separated polyethylene, since being originally a material having a soft and easily extensible property, is difficult to cut, resultantly making the laminated material to be a packaging material from which the content is difficult to take out. Although the easy cutting property can be developed only by making the strength of the polyethylene itself to be reduced, since the heat seal strength also weakens in such a situation that the adhesive strength with the another material is weak, the laminated material is not suitable as a packaging material.

[Production method of the laminate]

The production method of the laminate according to the present invention includes a step of extrusion laminating a resin composition including an ethylene-based polymer composition containing the ethylene-based polymer and the phosphorus-containing compound represented by the above formula (A) and/or the phosphorus-containing compound represented by the above formula (D) with a base material so that the resin composition and the base material directly contact each other. In the obtained laminate, a layer composed of the resin composition corresponds to the polyethylene layer, and a layer composed of the base material corresponds to the base material layer.

According to the production method of the laminate according to the present invention, since the resin composition contains the phosphorus-containing compound represented by the above formula (A) and/or the phosphorus-containing compound represented by the above formula (D), the oxidation state of the surface of the polyethylene layer becomes high and also in the case where the molding speed of the laminate is raised, a high adhesive force with the base material layer can be attained. Further, the generation of fish eyes due to progress of gelation by crosslinking is

suppressed. Particularly in the case of using a paper or a perforated film as the base material, or using a metal foil as the sandwiching layer, a favorable hand cutting property develops in the laminate even with no notch.

Further, according to the production method of the laminate according to the present invention, since no oxidation reaction occurs in an extruder where air is little, resin purging can be carried out as in usual polyethylene; and since the efficient resin oxidation reaction occurs in air, the space between a die and a chill roll does not need to be made long. Further, since the melted film does not cool down or does not joggle due to no use of ozone, high-speed molding can be carried out even under the same processing condition as usual.

By extrusion laminating the resin composition including the ethylene-based polymer composition according to the present invention, there can be obtained the laminate excellent in the moldability, and excellent in the adhesiveness with the base material, the mechanical strength, the seal strength and the easy cutting property. The polyethylene layer contained in the laminate may be at least one layer among layers obtained by multilayer molding by coextrusion molding, or may be a layer obtained by single-layer molding by single-extrusion molding.

Extrusion laminate molding methods include a method of molding at least once or more times by single-extrusion laminate molding using only one die, a method of molding using an extrusion laminate machine of tandem type or the like having a plurality of dies, and a sandwich extrusion laminating. The polyethylene layer may be laminate formed only on one surface of the base material, or may be laminate formed on both surfaces of the base material.

The speed at which the resin composition and the base material are extrusion laminated is preferably 150 to 1,000 m/min, more preferably 150 to 500 m/min, and still more preferably 150 to 300 m/min. In the production method of the laminate according to the present invention, even when the speed at which the resin composition and the base material are extrusion laminated is in the above range, the surface of the polyethylene layer is sufficiently oxidized and a high adhesive force between the polyethylene layer and the base material layer can be attained.

The temperature of the resin composition in the extrusion laminating is 310 to 350°C, more preferably 310 to 345°C, and still more preferably 310 to 330°C. When the temperature is 300°C or higher, since the surface oxidation of the melted film is promoted and molding can be carried out at a suitable viscosity, the adhesiveness with the base material is improved and molding using a thin melted film can be carried out. Further, when the temperature is 350°C or lower, lumps generation due to the resin deterioration and the decomposition reaction of the ethylene-based polymer composition can be suppressed. Further, as required, by carrying out an ozone treatment on the melted film, the surface oxidation of the melted film may further be promoted.

The air gap passing time T determined by the following expression when the resin composition and the base material are extrusion laminated is preferably 0.007 to 0.100 sec, more preferably 0.010 to 0.100 sec, and still more preferably 0.015 to 0.100 sec. When the air gap passing time T is 0.007 sec or longer, the contact time of the melted film with air is sufficiently secured, and there can be secured a sufficient adhesive strength with the base material in order to generate the surface oxidation reaction of the melted film. Further, when the air gap passing time T is 0.100 sec or shorter, since cooling solidification of the melted film in air can be suppressed, the tight contact of the base material with the melted film becomes favorable and the adhesiveness can thereby be secured.

$$\text{Air gap passing time } T = \text{an air gap space (m) / a molding speed (m/sec)}$$

## Examples

Hereinafter, the present invention will be described more specifically based on Examples, but the present invention is not limited to these Examples. Here, measurements and evaluations of various types of physical properties were carried out by the following methods.

### [MFR]

MFR was measured according to JIS K6760 at 190°C at a load of 2.16 kg.

### [Density]

The density of a sample was measured by heat-treating the sample in boiling water for 30 min and slowly cooling the sample over 1 hour to room temperature under the spontaneous cooling condition according to a method of JIS K6922-1, and measuring the density by using a density gradient tube according to JIS K7112.

[Melt tension]

The melt tension was determined by measuring stresses when the melted ethylene-based polymer composition was stretched at a constant rate. The measurement used an MT measuring apparatus, manufactured by Toyo Seiki Seisaku-sho Ltd. The measurement conditions were made to be: a resin temperature of 190°C, a melting time of 6 min, a barrel diameter of 9.55 mmϕ, an extrusion rate of 15 mm/min, a wind-up speed of 24 m/min (in the case where melted filaments ended in being broken, the wind-up speed was reduced by every 5 m/min), a nozzle diameter of 2.095 mmϕ, and a nozzle length of 8 mm.

[Neck-in]

The ethylene-based polymer or the ethylene-based polymer composition and a kraft paper of 50 g/$m^2$ being the base material were extrusion laminated by using a laminator, manufactured by Sumitomo Heavy Industries, Ltd., having an extruder of 65 mmϕ and a T die of 500 mm in die width, under the following conditions.

- air gap: 130 mm
- resin temperature below die: 320°C
- take-off speed: 80 m/min; in the case where processing at 80 m/min was impossible, at a highest possible processing rate.
- film thickness: 20 μm
- air gap passing time T in the take-off speed of 80 m/min: 0.098 sec

When the width of the T die was represented by $L_0$ (mm), and the width of the film laminated on the kraft paper at each take-off speed was represented by L (mm), the value of $L_0$ - L was defined as a neck-in.

[Film-breaking speed]

Extrusion laminating was carried out by the same method as in the above neck-in and while the take-off speed was raised from 10 m/min to 300 m/min in a proportion of 20 m/min per second, the take-off speed when the melted film was broken (including breakage of only end portions of the melted film) was defined as a film-breaking speed.

[Take-off surging generation speed]

Extrusion laminating was carried out by the same method as in the above neck-in and while the take-off speed was raised from 10 m/min to 300 m/min in a proportion of 20 m/min per second, the neck-in at take-off speeds of every 10 m/min was five times measured. A take-off speed at which neck-in values larger by ±1.5 mm or larger than the average value of the neck-in emerged two or more times was defined as a take-off surging generation speed. Here, the case where neck-in values larger by ±1.5 mm or larger than the average value of the neck-in did not emerge two or more times was defined as no generation of take-off surging.

[Heat seal strength]

The ethylene-based polymer or the ethylene-based polymer composition was extrusion laminated on a kraft paper of 50 g/$m^2$ by using a laminator, manufactured by Sumitomo Heavy Industries, Ltd., having an extruder of 65 mmϕ and a T die of 500 mm in die width, under the conditions of an air gap of 130 mm, a resin temperature below the die of 320°C, a take-off speed of 200 m/min and an air gap passing time T of 0.039 sec, with a regulation carried out so that the film thickness became 5 to 15 μm, and an aluminum foil of 9 μm in thickness was used as the sandwiching layer and sandwich extrusion laminated. Further, by using the sandwich extrusion laminated film, the ethylene-based polymer or the ethylene-based polymer composition was extrusion laminated on the non-laminated surface of the aluminum foil under the conditions of an air gap of 130 mm, a resin temperature below the die of 320°C, a take-off speed of 150 m/min and an air gap passing time T of 0.052 sec so that the film thickness became 15 μm.

The heat seal strength of the polyethylene layers of the extrusion laminate film was measured by the following method.
One-side heating bar sealer was used.
Heat seal pressure: 2 kg/$cm^2$
Heat seal time: 0.5 sec
Width of the seal bar: 10 mm
Test piece width: 15 mm

Peeling angle: 180°
Peeling speed: 300 mm/min

[Base material adhesive strength]

The ethylene-based polymer or the ethylene-based polymer composition was extrusion laminated on an OPET film of 12 μm on which urethane-based anchor coats were applied (trade name: Takelac A-3210 and Takenate A-3075, manufactured by Mitsui Chemicals Inc.) by using a laminator, manufactured by Sumitomo Heavy Industries, Ltd., having an extruder of 65 mmϕ and a T die of 500 mm in die width, under the conditions of an air gap of 130 mm, a resin temperature below the die of 320°C, a take-off speed of 200 m/min and an air gap passing time T of 0.039 sec, with a regulation carried out so that the film thickness became 5 to 15 μm, and an aluminum foil of 9 μm in thickness was used as the sandwiching layer and sandwich extrusion laminated. Further, by using the sandwich extrusion laminated film, the urethane-based anchor coats were applied on the non-laminated surface of the aluminum foil, and the ethylene-based polymer or the ethylene-based polymer composition was further extrusion laminated under the conditions of an air gap of 130 mm, a resin temperature below the die of 320°C, a take-off speed of 80 m/min and an air gap passing time T of 0.098 sec so that the film thickness became 15 μm.

The adhesive strength between the polyethylene layer and the aluminum foil as the base material of the extrusion laminate film was measured by the following method.
Test piece shape: strip shape
Test piece width: 15 mm
Peeling angle: 180°
Peeling speed: 300 mm/min

[Strip tearing strength]

An extrusion laminate film fabricated by the same method in the base material adhesive strength was cut out into a rectangle shape of 20 mm in width × 250 mm in length, and a notch of 50 mm in length was scored from an end portion of the strip in the length direction at the position of 10 mm (on the center line of the film) from the side edges thereof in the width direction to thereby fabricate a notched test piece. The test piece was mounted on a tensile tester so that the tearing angle became 180° as in a trouser-shape tearing strength measurement prescribed in ISO 6383-1; and there was measured a maximum load (N) detected when the test piece was torn at a rate of 200 mm/min. The maximum load was defined as a strip tearing strength.

[Analysis of additive materials]

The identification and the quantitative determination of additives were carried out by combining the following methods. First, the ethylene-based polymer composition was Soxhlet extracted by using an acetone/hexane (1/1 in v/v) mixed solvent; and the extract was collected through TLC (Thin-Layer Chromatography). The collected components were subjected to the analyses of inorganic components and organic components by IR measurement and ICP (Inductively Coupled Plasma), the molecular weight measurement by the retention time of HPLC (High Performance Liquid Chromatography) and FD-MS (Field Desorption Mass Spectrometry), the component identification by GC-MS (Gas Chromatography Mass spectrometry)analysis, and the like.

[Example 1]

0.20% by mass of tris(2,4-di-tert-butylphenyl) phosphite (trade name: Irgafos 168, manufactured by BASF AG) represented by the following formula (E) was added to a product pellet of an ethylene·1-hexene copolymer (trade name: Evolue SP1071C), commercially available from Prime Polymer Co., Ltd., produced by using a metallocene catalyst.

[Formula 9]

Formula (E)

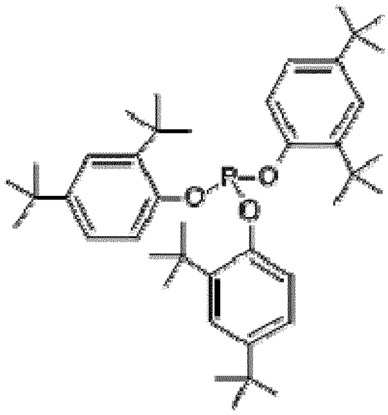

The mixture was melted and kneaded and thereafter extruded into a strand form by using a twin-screw counter-rotation 20 mmϕ extruder, manufactured by Toyo Seiki Seisaku-sho Ltd., under the conditions of a setting temperature of 200°C and a screw rotation frequency of 100 rpm, and cut to thereby obtain pellets of the ethylene-based polymer composition. Here, the amount of the tris(2,4-di-tert-butylphenyl) phosphite blended was checked by the above analyses of the additive materials. By using the pellets, the above evaluations were carried out. The results are shown in Table 1. Here, in the evaluations of the heat seal strength, the base material adhesive strength and the strip tearing strength, the thickness of the extrudates between the kraft paper or the OPET film and the aluminum foil was made to be 15 μm.

[Example 2]

Pellets of an ethylene-based polymer composition was fabricated and evaluated by the same methods as in Example 1, except for altering the amount of tris(2,4-di-tert-butylphenyl) phosphite blended to 0.05% by mass. The results are shown in Table 1.

[Example 3]

Pellets of an ethylene-based polymer composition was fabricated and evaluated by the same methods as in Example 1, except for using, as ethylene-based polymers, a mixture of 50% by mass of the product pellet of an ethylene·1-hexene copolymer (trade name: Evolue SP1071C), commercially available from Prime Polymer Co., Ltd., produced by using a metallocene catalyst and 50% by mass of a polyethylene (trade name: Mirason IIP), commercially available from Du Pont-Mitsui Polychemicals Co., Ltd., produced by a high-pressure radical polymerization process. The results are shown in Table 1.

[Example 4]

Pellets of an ethylene-based polymer composition was fabricated and evaluated by the same methods as in Example 1, except for using, as an ethylene-based polymer, a polyethylene (trade name: Mirason IIP), commercially available from Du Pont-Mitsui Polychemicals Co., Ltd., produced by a high-pressure radical polymerization process. The results are shown in Table 1.

[Example 5]

Pellets of an ethylene-based polymer composition was fabricated and evaluated by the same methods as in Example 1, except for using, as ethylene-based polymers, a mixture of 80% by mass of an ethylene-based polymer synthesized by the following method and 20% by mass of a polyethylene (trade name: Mirason IIP), commercially available from Du Pont-Mitsui Polychemicals Co., Ltd., produced by a high-pressure radical polymerization process. The results are shown in Table 1.

(Synthesis method of the ethylene-based polymer)

In a complete stirring and mixing-type continuous polymerization reaction vessel of 1 L in internal volume, charged were dried n-hexane in 4.3 L/h, a hexane solution (0.16 mmol/L) of a metallocene complex (di(p-tolyl)methylene(cyclopentadienyl)(octamethyloctahydrodibenzofluorenyl)zirconium dichloride) in 0.0106 mmol/h, a toluene solution (80 mmol/L) of methylalumoxane (trade name: MMAO-3A, manufactured by Tosoh Finechem Corp.) in 5.3 mmol/h, and a hexane solution (12 mmol/L) of triisobutylaluminum in 1.8 mmol/h. Simultaneously, in the polymerization reaction vessel, ethylene in 480 g/h and 1-octene in 0.87 kg/h, and hydrogen in 0.16 g/h were continuously fed. The polymerization reaction was carried out at a polymerization temperature of 150°C while the polymerization solution was continuously extracted from the top part of the polymerization reaction vessel so that the reaction pressure in the polymerization reaction vessel became 6.9 MPa. A small amount of isopropyl alcohol as a deactivating agent was added to the polymerization solution continuously extracted from the polymerization reaction vessel, and the polymerization solution was flashed to the atmospheric pressure to thereby deposit an ethylene-based polymer. Thereafter, the ethylene-based polymer was dried at 120°C over 8 hours in a vacuum drier in a nitrogen circulation. In this polymerization, the ethylene conversion rate was 92% and the yield of the ethylene-based polymer was 0.62 kg/h.

[Example 6]

Pellets of an ethylene-based polymer composition was fabricated and evaluated by the same methods as in Example 1, except for adding, in addition to the tris(2,4-di-tert-butylphenyl) phosphite, 0.03% by mass of erucic acid amide as a slipping agent. The results are shown in Table 1.

[Example 7]

Pellets of an ethylene-based polymer composition was fabricated and evaluated by the same methods as in Example 1, except for using, as ethylene-based polymers, a mixture of 80% by mass of an ethylene-based polymer synthesized by the following method and 20% by mass of a polyethylene (trade name: Mirason IIP), commercially available from Du Pont-Mitsui Polychemicals Co., Ltd., produced by a high-pressure radical polymerization process. The results are shown in Table 1.

(Synthesis method of the ethylene-based polymer)

In a complete stirring and mixing-type continuous polymerization reaction vessel of 1 L in internal volume, charged were dried n-hexane in 4.0 L/h, a hexane solution (0.16 mmol/L) of a metallocene complex (MC-46) in 0.0072 mmol/h, a toluene solution (80 mmol/L) of methylalumoxane (trade name: MMAO-3A, manufactured by Tosoh Finechem Corp.) in 3.6 mmol/h, and a hexane solution (12 mmol/L) of triisobutylaluminum in 1.8 mmol/h. Simultaneously, in the polymerization reaction vessel, ethylene in 480 g/h and 1-hexene in 0.059 kg/h, and hydrogen in 0.30 g/h were continuously fed. The polymerization reaction was carried out at a polymerization temperature of 150°C while the polymerization solution was continuously extracted from the top part of the polymerization reaction vessel so that the reaction pressure in the polymerization reaction vessel became 6.9 MPa. A small amount of isopropyl alcohol as a deactivating agent was added to the polymerization solution continuously extracted from the polymerization reaction vessel, and 500 ppm by mass of Irganox 1076 (trade name, manufactured by Ciba Specialty Chemicals Corp.) as a heat-resistant stabilizer was added thereto; thereafter, the polymerization solution was flashed to the atmospheric pressure to thereby deposit an ethylene-based polymer. Thereafter, the ethylene-based polymer was dried at 120°C over 8 hours in a vacuum drier in a nitrogen circulation. In this polymerization, the ethylene conversion rate was 93.5% and the yield of the ethylene-based polymer was 0.45 kg/h.

[Example 8]

In the evaluations of the heat seal strength, the base material adhesive strength and the strip tearing strength, an aluminum-deposited PET was used in place of the aluminum foil, and the sandwich extrusion laminating was carried out so that the aluminum-deposited surface came on the kraft paper side or the OPET film side. In the evaluation of the base material adhesive strength, the adhesive strength between the polyethylene layer and the aluminum-deposited surface was measured. Except for these, pellets of an ethylene-based polymer composition was fabricated and evaluated by the same methods as in Example 1. The results are shown in Table 1.

[Example 9]

In the evaluations of the heat seal strength, the base material adhesive strength and the strip tearing strength, the thickness of the extrudates between the kraft paper or the OPET film and the aluminum foil was altered to 5 μm. Except for this, pellets of an ethylene-based polymer composition was fabricated and evaluated by the same methods as in Example 1. The results are shown in Table 1.

[Comparative Example 1]

Pellets of an ethylene-based polymer composition was fabricated and evaluated by the same methods as in Example 1, except for adding 0.05% by mass of stearyl 3-(3,5-di-tert-butyl-4-hydroxyphenyl)propionate (trade name: Irganox 1076, manufactured by Ciba Specialty Chemicals Corp.) represented by the following formula (F) and 0.20% by mass of tris(2,4-di-tert-butylphenyl) phosphite (trade name: Irgafos 168, manufactured by BASF AG) represented by the above formula (E) to a product pellet of an ethylene·1-hexene copolymer (trade name: Evolue SP1071C), commercially available from Prime Polymer Co., Ltd., produced by using a metallocene catalyst. The results are shown in Table 2.

[Formula 10]

Formula (F)

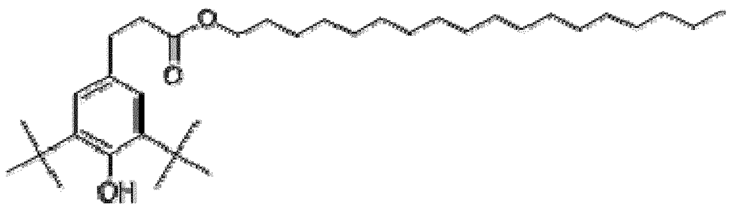

[Comparative Example 2]

Pellets of an ethylene-based polymer composition was fabricated and evaluated by the same methods as in Example 1, except for using, as ethylene-based polymers, a mixture of 80% by mass of an ethylene·4-methyl-1-pentene copolymer (trade name: Ultozex 20100J), commercially available from Prime Polymer Co., Ltd., produced by a solution polymerization process and 20% by mass of a polyethylene (trade name: Mirason IIP), commercially available from Du Pont-Mitsui Polychemicals Co., Ltd., produced by a high-pressure radical polymerization process, and adding no tris(2,4-di-tert-butylphenyl) phosphite. Here, the ethylene-based polymer composition contained 0.05% by mass of tris(2,4-di-tert-butylphenyl) phosphite being a phosphorus-containing compound represented by the above formula (E), 0.07% by mass of stearyl 3-(3,5-di-tert-butyl-4-hydroxyphenyl)propionate being a compound having a phenol group, and 0.11% by mass of a neutralizing agent as another additive. The results are shown in Table 2.

[Comparative Example 3]

Pellets of an ethylene-based polymer composition was fabricated and evaluated by the same methods as in Example 1, except for adding 0.05% by mass of stearyl 3-(3,5-di-tert-butyl-4-hydroxyphenyl)propionate in place of adding 0.20% by mass of tris(2,4-di-tert-butylphenyl) phosphite. The results are shown in Table 2.

[Comparative Example 4]

Pellets of an ethylene-based polymer composition was fabricated and evaluated by the same methods as in Example 1, except for adding 0.05% by mass of 6-tert-butyl-4-[3-[(2,4,8,10-tetra-tert-butyldibenzo[d,f][1,3,2]dioxaphosphepin-6-yl)oxy]propyl]-2-methylphenol (trade name: Sumiriser GP, manufactured by Sumitomo Chemical Co., Ltd.) represented by the following formula (G) in place of adding 0.20% by mass of tris(2,4-di-tert-butylphenyl) phosphite. The results are shown in Table 2.

[Formula 11]

Formula (G)

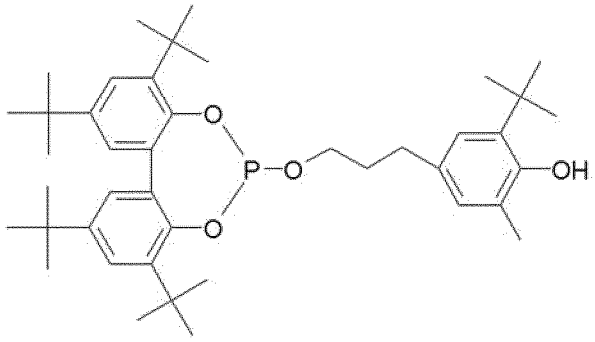

[Comparative Example 5]

By using a product pellet of a polyethylene (trade name: Mirason IIP), commercially available from Du Pont-Mitsui Polychemicals Co., Ltd., produced by a high-pressure radical polymerization process, as pellets of the ethylene-based polymer composition, the evaluations were carried out as in Example 1. The results are shown in Table 2.

[Comparative Example 6]

By using a product pellet of an ethylene·1-hexene copolymer (trade name: Evolue SP1071C), commercially available from Prime Polymer Co., Ltd., produced by using a metallocene catalyst, as pellets of the ethylene-based polymer composition, the evaluations were carried out as in Example 1. The results are shown in Table 2.

[Comparative Example 7]

By using a product pellet of an ethylene·4-methyl-1-pentene copolymer (trade name: Ultozex 20100J), commercially available from Prime Polymer Co., Ltd., produced by a solution polymerization process, as pellets of the ethylene-based polymer composition, the evaluations were carried out as in Example 1. Here, the ethylene-based polymer composition contained 0.06% by mass of tris(2,4-di-tert-butylphenyl) phosphite being a phosphorus-containing compound represented by the above formula (E), 0.10% by mass of stearyl 3-(3,5-di-tert-butyl-4-hydroxyphenyl)propionate being a compound having a phenol group, and 0.13% by mass of a neutralizing agent as another additive. The results are shown in Table 2.

[Comparative Example 8]

In the evaluations of the heat seal strength, the base material adhesive strength and the strip tearing strength, an aluminum-deposited PET was used in place of the aluminum foil, and the sandwich extrusion laminating was carried out so that the aluminum-deposited surface came on the kraft paper side or the OPET film side. In the evaluation of the base material adhesive strength, the adhesive strength between the polyethylene layer and the aluminum-deposited surface was measured. Except for these, pellets of an ethylene-based polymer composition was fabricated and evaluated by the same methods as in Comparative Example 1. The results are shown in Table 2.

[Comparative Example 9]

Pellets of an ethylene-based polymer composition was fabricated and evaluated by the same methods as in Example 1, except for adding 0.20% by mass of tetrakis(2,4-di-tert-butylphenyl) 4,4'-bisphenylene-di-phosphonite in place of adding 0.20% by mass of tris(2,4-di-tert-butylphenyl) phosphite. The results are shown in Table 2.

[Comparative Example 10]

In the evaluations of the heat seal strength, the base material adhesive strength and the strip tearing strength, the thickness of the extrudates between the kraft paper or the OPET film and the aluminum foil was altered to 40 μm. Except for this, pellets of an ethylene-based polymer composition was fabricated and evaluated by the same methods as in Comparative Example 9. The results are shown in Table 2.

[Table 1]

| Item | Unit | Example 1 | Example 2 | Example 3 | Example 4 | Example 5 | Example 6 | Example 7 | Example 8 | Example 9 |
|---|---|---|---|---|---|---|---|---|---|---|
| MFR | g/10 min | 10.0 | 10.0 | 8.0 | 7.0 | 12.0 | 10.0 | 18.0 | 10.0 | 10.0 |
| Density | kg/m$^3$ | 910 | 910 | 915 | 920 | 905 | 910 | 922 | 910 | 910 |
| Melt Tension | mN | 22.0 | 22.0 | 48.0 | 69.0 | 25.0 | 22.0 | 20.0 | 22.0 | 22.0 |
| Amount of Phosphorus-Containing Compound represented by Formula (A) Blended | % by mass | 0.20 | 0.05 | 0.20 | 0.20 | 0.20 | 0.20 | 0.20 | 0.20 | 0.20 |
| Amount of Compound having Phenol Group Blended | % by mass | 0.00 | 0.00 | 0.00 | 0.00 | 0.00 | 0.00 | 0.00 | 0.00 | 0.00 |
| Amount of Another Additive Blended | % by mass | 0.00 | 0.00 | 0.00 | 0.00 | 0.00 | 0.03 | 0.00 | 0.00 | 0.00 |
| Neck-in | mm | 72 | 72 | 40 | 37 | 75 | 72 | 77 | 72 | 72 |
| Film-Breaking Speed | m/min | 300 or higher | 300 or higher | 280 | 250 | 300 or higher | 300 or higher | 300 or higher | 300 or higher | 300 or higher |
| Speed at Take-off Surging Generation | m/min | no generation | no generation | no generation | no generation | no generation | no generation | no generation | no generation | no generation |
| Heat Seal Strength | N/15 mm | 10.8 | 10.6 | 9.4 | 8.8 | 9.6 | 10.6 | 10.5 | 11.8 | 10.1 |
| Base Material Adhesive Strength | N/15 mm | 2.5 | 2.0 | 2.3 | 2.0 | 2.2 | 2.1 | 2.1 | 1.8 | 1.8 |
| Strip Tearing Strength | N | 1.5 | 1.3 | 0.4 | 0.3 | 1.0 | 1.3 | impossible sample fabrication | 2.2 | 2.1 |

[Table 2]

| Item | Unit | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| MFR | g/10 min | 10.0 | 8.7 | 10.0 | 10.0 | 10.0 | 7.0 | 8.7 | 10.0 | 10.0 | 10.0 |
| Density | kg/m$^3$ | 910 | 918 | 910 | 910 | 910 | 920 | 918 | 910 | 910 | 910 |
| Melt Tension | mN | 22.0 | 25.0 | 22.0 | 22.0 | 22.0 | 69.0 | 0.1 or lower | 22.0 | 22.0 | 22.0 |
| Amount of Phosphorus-Containing Compound represented by Formula (A) Blended | % by mass | 0.20 | 0.05 | 0.00 | 0.00 | 0.00 | 0.00 | 0.06 | 0.20 | 0.00 | 0.00 |
| Amount of Compound having Phenol Group Blended | % by mass | 0.05 | 0.07 | 0.05 | 0.05 | 0.00 | 0.00 | 0.10 | 0.05 | 0.00 | 0.00 |
| Amount of Another Additive Blended | % by mass | 0.00 | 0.11 | 0.00 | 0.00 | 0.00 | 0.00 | 0.13 | 0.00 | 0.20 | 0.20 |
| Neck-in | mm | 72 | 80 | 72 | 72 | 72 | 37 | 185 | 72 | 72 | 72 |
| Film-Breaking Speed | m/min | 300 or higher | 300 or higher | 300 or higher | 300 or higher | 300 or higher | 250 | - | 300 or higher | 300 or higher | 300 or higher |
| Speed at Take-off Surging Generation | m/min | no generation | no generation | no generation | no generation | no generation | no generation | 30 | no generation | no generation | no generation |
| Heat Seal Strength | N/15 mm | 6.3 | 4.5 | 4.2 | 4.5 | 9.3 | 3.3 | impossible sample fabrication | 6.5 | 6.5 | 11.5 |

(continued)

| Item | Unit | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Base Material Adhesive Strength | N/15 mm | 0.8 | 0.4 | 0.3 | 0.3 | 1.5 | 0.2 | impossible sample fabrication | 0.2 | 0.1 | 2.0 |
| Strip Tearing Strength | N | 5.0 | 1.1 | 5.6 | 5.5 | 3.5 | 1.8 | impossible sample fabrication | 5.4 | 6.4 | 9.3 |

In Comparative Examples 1 to 4 and 8, since a compound having a phenol group was blended in 0.05% by mass or more, the surface oxidation of the polyethylene layer hardly occurred and the adhesive strength with the base material became weak.

In Comparative Examples 5 and 6, since a phosphorus-containing compound represented by the formula (A) and/or a phosphorus-containing compound represented by the formula (D) were not blended, the surface oxidation of the polyethylene layer hardly occurred and the adhesive strength with the base material became weak.

In Comparative Example 7, since the melt tension was low, the neck-in was large and further the take-off surging occurred, and an extrusion laminate film could not be fabricated.

In Comparative Example 9, a phosphorus-containing compound represented by the formula (A) and/or a phosphorus-containing compound represented by the formula (D) were not blended, and a phosphorus-based antioxidant was instead blended. Since the phosphorus-based antioxidant decomposed to thereby produce a compound having a phenol group, the surface oxidation of the polyethylene layer hardly occurred and the adhesive strength with the base material became low.

In Comparative Example 10, although since the polyethylene layer was thick, the adhesiveness sufficiently developed, the tearing strength became high, thus making it difficult for the film to be opened.

The present application claims priority based on Japanese Patent Application No. 2015-170454, filed on August 31, 2015.

## Claims

1. A method for producing a laminate, comprising extrusion laminating a resin composition comprising an ethylene-based polymer composition comprising an ethylene-based polymer and a phosphorus-containing compound represented by the following formula (A) and/or a phosphorus-containing compound represented by the following formula (D) with a base material so that the resin composition and the base material directly contact each other,
wherein the ethylene-based polymer comprises at least one of a high-pressure processed low-density polyethylene and a copolymer of ethylene with an $\alpha$-olefin having 3 to 10 carbon atoms; and
the ethylene-based polymer composition satisfies the following requirements (I) to (IV); wherein the resin composition and the base material are extrusion laminated at a speed of 150 to 1,000 m/min; and
wherein a temperature of the resin composition when being extrusion laminated is 310 to 350°C:

Formula (A)

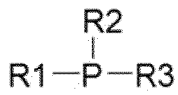

wherein R1 to R3 are each independently an alkyl group having 1 to 30 carbon atoms, an isoalkyl group having 3 to 30 carbon atoms, an alkenyl group having 3 to 18 carbon atoms, a cycloalkyl group having 5 to 12 carbon atoms or an aryl group; or
an alkyl group having 1 to 18 carbon atoms substituted with an aryl group, a halogen atom, -COOR4, -CN, -NR5R6 or -CONR7R8; or
an alkoxy group having 1 to 30 carbon atoms, an isoalkyloxy group having 3 to 30 carbon atoms, an alkenyloxy group having 3 to 18 carbon atoms or a cycloalkyloxy group having 5 to 12 carbon atoms; or
an alkoxy group having 1 to 18 carbon atoms substituted with an aryl group, a halogen atom, -COOR9, -CN, -NR10R11 or -CONR12R13, or a group represented by the following formula (B):

Formula (B)

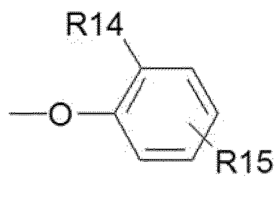

or, an alkylthio group having 1 to 30 carbon atoms, an isoalkylthio group having 3 to 30 carbon atoms, an alkenylthio group having 3 to 18 carbon atoms or a cycloalkylthio group having 5 to 12 carbon atoms; or
an alkylthio group having 1 to 18 carbon atoms substituted with an aryl group, a halogen atom, -COOR16, -CN, -NR17R18 or -CONR19R20, or a group represented by the following formula (C):

Formula (C)

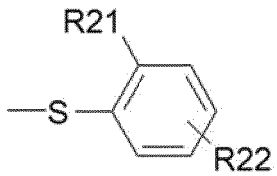

wherein R4 to R13, R15 to R20 and R22 are each independently a hydrogen atom, an alkyl group having 1 to 30 carbon atoms, an isoalkyl group having 3 to 30 carbon atoms, an alkenyl group having 3 to 18 carbon atoms, a cycloalkyl group having 5 to 12 carbon atoms or an aryl group;
R14 and R21 are each an alkyl group having 1 to 30 carbon atoms, an isoalkyl group having 3 to 30 carbon atoms, an alkenyl group having 3 to 18 carbon atoms, a cycloalkyl group having 5 to 12 carbon atoms or an aryl group; and at least two of R1 to R3 may be bonded with each other:

Formula (D)

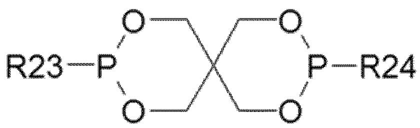

wherein R23 and R24 are synonymous with R1 to R3 in the above formula (A), and

(I) a melt flow rate (MFR) of the ethylene-based polymer composition at 190°C at a load of 2.16 kg is 4 to 50 g/10 min;
(II) a density thereof is 875 to 940 kg/$m^3$;
(III) a content of a compound having a phenol group therein is lower than 0.05% by mass; and
(IV) a melt tension thereof at 190°C is 10 mN or higher.

wherein the resin composition and the base material are extrusion laminated at a speed of 150 to 1,000 m/min; and wherein a temperature of the resin composition when being extrusion laminated is 310 to 350°C.

2. The method for producing a laminate according to claim 1, wherein an air gap passing time T determined by the following expression when the resin composition and the base material are extrusion laminated is 0.007 to 0.100 sec:

$$\text{Air gap passing time } T = \text{an air gap space (m)} / \text{a molding speed (m/sec)}.$$

3. The method for producing a laminate according to claim 1 or 2, wherein in the formula (A), R1 to R3 are each independently a group represented by the formula (B).

4. The method for producing a laminate according to any one of claims 1 to 3, wherein the phosphorus-containing compound is tris(2,4-di-tert-butylphenyl) phosphite.

5. The method for producing a laminate according to any one of claims 1 to 4, wherein a polyethylene layer comprising the ethylene-based polymer composition in the laminate has a thickness of 5 to 100 μm.

6. The method for producing a laminate according to any one of claims 1 to 5, wherein a base material layer comprising the base material in the laminate has a thickness of 1 to 500 μm.

7. The method for producing a laminate according to any one of claims 1 to 6, wherein the base material layer is a paper, a perforated film, a metal foil, a metal-deposited film or a ceramic-deposited film.

**Patentansprüche**

1. Verfahren zur Herstellung eines Laminats, umfassend das Extrusionslaminieren einer Harzzusammensetzung, umfassend eine auf Ethylen basierende Polymerzusammensetzung, umfassend ein auf Ethylen basierendes Polymer und eine phosphorhaltige Verbindung, die durch die folgende Formel (A) dargestellt wird, und/oder eine phosphorhaltige Verbindung, die durch die folgende Formel (D) dargestellt wird, mit einem Basismaterial, so dass die Harzzusammensetzung und das Basismaterial direkt miteinander in Kontakt kommen,
wobei das auf Ethylen basierende Polymer mindestens eines von einem hochdruckverarbeiteten Polyethylen niedriger Dichte und einem Copolymer von Ethylen mit einem $\alpha$-Olefin mit 3 bis 10 Kohlenstoffatomen umfasst; und die auf Ethylen basierende Polymerzusammensetzung die folgenden Anforderungen (I) bis (IV) erfüllt;
wobei die Harzzusammensetzung und das Basismaterial bei einer Geschwindigkeit von 150 bis 1.000 m/min extrusionslaminiert werden; und
wobei eine Temperatur der Harzzusammensetzung, wenn sie extrusionslaminiert wird, 310 bis 350 °C beträgt:

Formel (A)

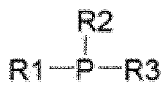

wobei R1 bis R3 jeweils unabhängig voneinander eine Alkylgruppe mit 1 bis 30 Kohlenstoffatomen, eine Isoalkylgruppe mit 3 bis 30 Kohlenstoffatomen, eine Alkenylgruppe mit 3 bis 18 Kohlenstoffatomen, eine Cycloalkylgruppe mit 5 bis 12 Kohlenstoffatomen oder eine Arylgruppe sind; oder
eine Alkylgruppe mit 1 bis 18 Kohlenstoffatomen, substituiert mit einer Arylgruppe, einem Halogenatom, -COOR4, -CN, -NR5R6 oder -CONR7R8; oder
eine Alkoxygruppe mit 1 bis 30 Kohlenstoffatomen, eine Isoalkyloxygruppe mit 3 bis 30 Kohlenstoffatomen, eine Alkenyloxygruppe mit 3 bis 18 Kohlenstoffatomen oder eine Cycloalkyloxygruppe mit 5 bis 12 Kohlenstoffatomen; oder
eine Alkoxygruppe mit 1 bis 18 Kohlenstoffatomen, substituiert mit einer Arylgruppe, einem Halogenatom, -COOR9, -CN, -NR10R11 oder -CONR12R13, oder eine durch die folgende Formel (B) dargestellte Gruppe:

Formel (B)

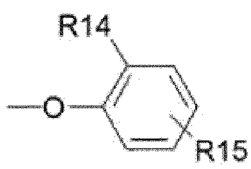

oder, eine Alkylthiogruppe mit 1 bis 30 Kohlenstoffatomen, eine Isoalkylthiogruppe mit 3 bis 30 Kohlenstoffatomen, eine Alkenylthiogruppe mit 3 bis 18 Kohlenstoffatomen oder eine Cycloalkylthiogruppe mit 5 bis 12 Kohlenstoffatomen; oder
eine Alkylthiogruppe mit 1 bis 18 Kohlenstoffatomen, substituiert mit einer Arylgruppe, einem Halogenatom, -COOR16, -CN, -NR17R18 oder -CONR19R20, oder eine durch die folgende Formel (C) dargestellte Gruppe:

Formel (C)

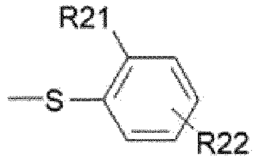

wobei R4 bis R13, R15 bis R20 und R22 jeweils unabhängig voneinander ein Wasserstoffatom, eine Alkylgruppe mit 1 bis 30 Kohlenstoffatomen, eine Isoalkylgruppe mit 3 bis 30 Kohlenstoffatomen, eine Alkenylgruppe mit 3 bis 18 Kohlenstoffatomen, eine Cycloalkylgruppe mit 5 bis 12 Kohlenstoffatomen oder eine Arylgruppe sind;
R14 und R21 jeweils eine Alkylgruppe mit 1 bis 30 Kohlenstoffatomen, eine Isoalkylgruppe mit 3 bis 30 Kohlenstoffatomen, eine Alkenylgruppe mit 3 bis 18 Kohlenstoffatomen, eine Cycloalkylgruppe mit 5 bis 12 Kohlenstoffatomen oder eine Arylgruppe sind; und
mindestens zwei von R1 bis R3 aneinander gebunden sein können:

Formel (D)

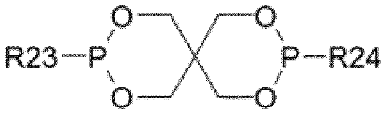

wobei R23 und R24 synonym mit R1 bis R3 in der obigen Formel (A) sind und

(I) eine Schmelzflussrate (MFR) der auf Ethylen basierenden Polymerzusammensetzung bei 190 °C bei einer Belastung von 2,16 kg 4 bis 50 g/10 min beträgt;
(II) eine Dichte davon 875 bis 940 kg/$m^3$ beträgt;
(III) der Gehalt einer Verbindung mit einer Phenolgruppe darin weniger als 0,05 Masseprozent beträgt; und
(IV) eine Schmelzspannung davon bei 190 °C 10 mN oder höher ist.

wobei die Harzzusammensetzung und das Basismaterial bei einer Geschwindigkeit von 150 bis 1.000 m/min extrusionslaminiert werden; und
wobei eine Temperatur der Harzzusammensetzung, wenn sie extrusionslaminiert wird, 310 bis 350 °C beträgt.

**2.** Verfahren zur Herstellung eines Laminats nach Anspruch 1, wobei eine Luftspaltdurchlaufzeit T, bestimmt durch den folgenden Ausdruck, wenn die Harzzusammensetzung und das Basismaterial extrusionslaminiert werden, 0,007 bis 0,100 Sekunden beträgt:

$$\text{Luftspaltdurchlaufzeit } T = \text{ein Luftspaltraum (m) / eine Formgebungsgeschwindigkeit (m/Sek.).}$$

**3.** Verfahren zur Herstellung eines Laminats nach Anspruch 1 oder 2, wobei in der Formel (A) R1 bis R3 jeweils unabhängig voneinander eine durch die Formel (B) dargestellte Gruppe sind.

**4.** Verfahren zur Herstellung eines Laminats nach einem der Ansprüche 1 bis 3, wobei die phosphorhaltige Verbindung Tris(2,4-di-tert-butylphenyl)phosphit ist.

**5.** Verfahren zur Herstellung eines Laminats nach einem der Ansprüche 1 bis 4, wobei eine Polyethylenschicht, die die auf Ethylen basierende Polymerzusammensetzung in dem Laminat umfasst, eine Stärke von 5 bis 100 μm aufweist.

**6.** Verfahren zur Herstellung eines Laminats nach einem der Ansprüche 1 bis 5, wobei eine Basismaterialschicht, die das Basismaterial im Laminat umfasst, eine Stärke von 1 bis 500 μm aufweist.

**7.** Verfahren zur Herstellung eines Laminats nach einem der Ansprüche 1 bis 6, wobei die Basismaterialschicht ein

Papier, eine perforierte Folie, eine Metallfolie, eine metallbeschichtete Folie oder eine keramikbeschichtete Folie ist.

## Revendications

1. Procédé de production d'un stratifié, comprenant la stratification par extrusion d'une composition de résine comprenant une composition de polymère à base d'éthylène comprenant un polymère à base d'éthylène et un composé contenant du phosphore représenté par la formule (A) suivante et / ou un composé contenant du phosphore représenté par la formule (D) suivante avec un matériau de base de sorte que la composition de résine et le matériau de base soient directement en contact l'un avec l'autre,
dans lequel le polymère à base d'éthylène comprend au moins l'un d'un polyéthylène basse densité traité à haute pression et d'un copolymère d'éthylène avec une $\alpha$-oléfine ayant 3 à 10 atomes de carbone; et
la composition de polymère à base d'éthylène satisfait aux exigences (I) à (IV) suivantes ; dans lequel la composition de résine et le matériau de base sont stratifiés par extrusion à une vitesse de 150 à 1.000 m/min ; et
dans lequel une température de la composition de résine lorsqu'elle est stratifiée par extrusion est de 310 à 350 °C:

Formule (A)

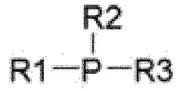

dans lequel R1 à R3 sont chacun indépendamment un groupe alkyle ayant 1 à 30 atomes de carbone, un groupe isoalkyle ayant 3 à 30 atomes de carbone, un groupe alcényle ayant 3 à 18 atomes de carbone, un groupe cycloalkyle ayant 5 à 12 atomes de carbone ou un groupe aryle ; ou
un groupe alkyle ayant 1 à 18 atomes de carbone substitué par un groupe aryle, un atome d'halogène, -COOR4, -CN, -NR5R6 ou -CONR7R8 ; ou
un groupe alcoxy ayant 1 à 30 atomes de carbone, un groupe isoalkyloxy ayant 3 à 30 atomes de carbone, un groupe alcényloxy ayant 3 à 18 atomes de carbone ou un groupe cycloalkyloxy ayant 5 à 12 atomes de carbone ; ou un groupe alcoxy ayant 1 à 18 atomes de carbone substitué par un groupe aryle, un atome d'halogène, -COOR9, -CN, -NR10R11 ou -CONR12R13, ou un groupe représenté par la formule (B) suivante :

Formule (B)

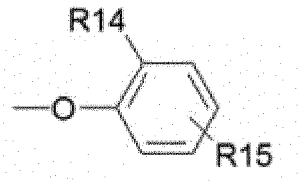

ou, un groupe alkylthio ayant 1 à 30 atomes de carbone, un groupe isoalkylthio ayant 3 à 30 atomes de carbone, un groupe alcénylthio ayant 3 à 18 atomes de carbone ou un groupe cycloalkylthio ayant 5 à 12 atomes de carbone ; ou un groupe alkylthio ayant 1 à 18 atomes de carbone substitué par un groupe aryle, un atome d'halogène, -COOR16, -CN, -NR17R18 ou -CONR19R20, ou un groupe représenté par la formule (C) suivante :

Formule (C)

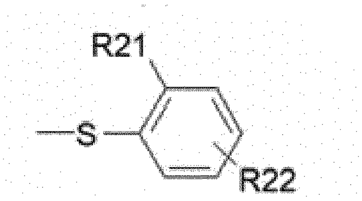

dans lequel R4 à R13, R15 à R20 et R22 sont chacun indépendamment un atome d'hydrogène, un groupe alkyle ayant 1 à 30 atomes de carbone, un groupe isoalkyle ayant 3 à 30 atomes de carbone, un groupe alcényle ayant

3 à 18 atomes de carbone, un groupe cycloalkyle ayant 5 à 12 atomes de carbone ou un groupe aryle ;
R14 et R21 sont chacun un groupe alkyle ayant 1 à 30 atomes de carbone, un groupe isoalkyle ayant 3 à 30 atomes de carbone, un groupe alcényle ayant 3 à 18 atomes de carbone, un groupe cycloalkyle ayant 5 à 12 atomes de carbone ou un groupe aryle ; et
au moins deux de R1 à R3 peuvent être liés l'un à l'autre :

Formule (D)

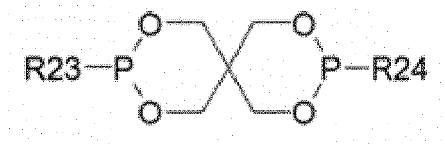

dans lequel R23 et R24 sont synonymes de R1 à R3 dans la formule (A) ci-dessus, et

(I) un indice de fluidité à chaud (MFR) de la composition de polymère à base d'éthylène à 190 °C sous une charge de 2,16 kg est de 4 à 50 g/10 min ;
(II) une densité de celui-ci est de 875 à 940 kg/$m^3$ ;
(III) une teneur en composé contenant un groupe phénol est inférieure à 0,05% en masse ; et
(IV) une tension de fusion de celui-ci à 190 °C est de 10 mN ou plus.

dans lequel la composition de résine et le matériau de base sont stratifiés par extrusion à une vitesse de 150 à 1.000 m/min ; et
dans lequel une température de la composition de résine lorsqu'elle est stratifiée par extrusion est de 310 à 350 °C.

**2.** Procédé de production d'un stratifié selon la revendication 1, dans lequel un temps de passage de l'entrefer T déterminé par l'expression suivante lorsque la composition de résine et le matériau de base sont stratifiés par extrusion est de 0,007 à 0,100 s :

Temps de passage de l'entrefer T = un espace d'entrefer (m) / une vitesse de moulage (m/s).

**3.** Procédé de production d'un stratifié selon la revendication 1 ou 2, dans lequel dans la formule (A), R1 à R3 sont chacun indépendamment un groupe représenté par la formule (B).

**4.** Procédé de production d'un stratifié selon l'une quelconque des revendications 1 à 3, dans lequel le composé contenant du phosphore est le tris(2,4-di-tert-butylphényl) phosphite.

**5.** Procédé de production d'un stratifié selon l'une quelconque des revendications 1 à 4, dans lequel une couche de polyéthylène comprenant la composition de polymère à base d'éthylène dans le stratifié a une épaisseur de 5 à 100 $\mu$m.

**6.** Procédé de production d'un stratifié selon l'une quelconque des revendications 1 à 5, dans lequel une couche de matériau de base comprenant le matériau de base dans le stratifié a une épaisseur de 1 à 500 $\mu$m,

**7.** Procédé de production d'un stratifié selon l'une quelconque des revendications 1 à 6, dans lequel la couche de matériau de base est un papier, un film perforé, une feuille métallique, un film déposé en métal ou un film déposé en céramique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9616115 A
- JP 6190964 A
- JP 2025327 A
- JP 2002210867 A
- JP 2008031383 A
- JP 11138721 A
- WO 2006080578 A
- WO 2004104055 A
- WO 0208306 A
- JP 2015170454 A


### Non-patent literature cited in the description


- **MASAYOSHI ARAKI.** Newest Laminate Processing Handbook. 1989, 267
- Catalytic Olefin Polymerization. Kodansha Scientific Ltd, 1990, 376
- **WALTER KAMINSKY.** *Makromol. Chem.,* 1992, vol. 193, 606